# EUROPEAN PATENT SPECIFICATION

(11) **EP 1 741 482 B1**
(45) Date of publication and mention of the grant of the patent: **15.10.2008**
(21) Application number: 06003618.3
(22) Date of filing: 13.02.2002
(51) Int. Cl.: B01F 3/08, B01F 5/04, B01F 13/00, B01J 13/04, B01J 19/00

(54) **Process and apparatus for producing microcapsules**
Vorrichtung und Verfahren zum Herstellen von Mikrokapseln
Procédé et appareil pour la production de micro-capsules

(30) Priority: 23.02.2001 JP 2001048097; 07.08.2001 JP 2001238624
(43) Date of publication of application: 10.01.2007
(62) Divisional of application: 02700576.8
(73) Proprietor: Japan Science and Technology Agency, Kawaguchi-shi, Saitama 332-0012 (JP)
(72) Inventor: Higuchi, Toshiro, Yokohama-shi Kanagawa 224-0006 (JP); Torii, Toru, Tokyo 167-0051 (JP); Nishisako, Takashi, Tokyo 110-0008 (JP); Taniguchi, Tomohiro, Ichikawa-shi Chiba 272-0802 (JP)
(74) Representative: Hoarton, Lloyd Douglas Charles

(56) References cited:
- DE-A1- 10 000 621
- GB-A- 2 097 692
- US-A1- 5 858 187
- US-A1- 5 990 183

## Description

### Technical Field

The present invention relates to a process and apparatus for producing a microemulsion and microcapsules in water, oil, and chemically inert liquid.

### Background Art

Conventionally, apparatuses for producing a microemulsion (containing microspheres) and microcapsules have been used in steps of manufacturing chemicals and some processes have been proposed. There are the following processes (see, for example, PCT Japanese Translation Patent Application Publication No. 8-508933): a process in which a second solution is dropped in a first solution, a process in which a first solution is dropped in the air from the inside portion of a double tube and a second solution is dropped from the outside portion thereof, and so on. Among processes for scattering droplets in the air, there is a process for ejecting droplets using piezoelectric elements used for inkj et printers and so on.

On the other hand, a technique in which monodispersed microdroplets are prepared with laboratory equipment is disclosed in Japanese Unexamined Patent Application Publication No. 2000-84384. However, in this technique, there is a problem in that the rate of preparing such microdroplets is low and the microdroplets cannot be covered with surfactants or microcapsule shells. Furthermore, only microdroplets having a diameter three times larger than the width of microchannels can be prepared.

GB-A-2097692 discloses a method of combining chemical reagents for initiating and controlling a chemical reaction or preparing mixtures of reagents.

US-A-5990183 discloses a method of preparing porous particles.

The present invention seeks to provide a process and apparatus for rapidly producing microcapsules in a simple manner.

According to one aspect of the present invention, there is provided a process for producing microcapsules as defined in claim 1 hereinafter.

According to another aspect of the present invention, there is provided an apparatus for producing microcapsules as defined in claim 2 hereinafter.

### Brief Description of the Drawings

FIG. 1 is a plan view showing a microdroplet-producing apparatus.
FIG. 2 is an illustration showing microdroplet-produding processes.
FIG. 3 is a plan view showing a microcapsule-producing apparatus.
FIG. 4 is an illustration showing a microcapsule-producing process.
FIG. 5 is a plan view showing a microcapsule-producing apparatus.
FIG. 6 is an illustration showing a microcapsule-producing process.
FIG. 7 is an illustration showing the particle size obtained by varying the height of the continuous phases and dispersion phases.
FIG. 8 is an illustration showing a mechanism for ejecting a dispersion phase, a shell-forming phase, or a content-forming phase placed in a microdroplet-producing apparatus.
FIG. 9 is an illustration showing a mechanism for ejecting a dispersion phase, a shell-forming phase, or a content-forming phase placed in a microdroplet-producing apparatus.
FIG. 10 is an illustration showing a mechanism for ejecting a dispersion phase, a shell-forming phase, or a content-forming phase placed in a microdroplet-producing apparatus.
FIG. 11 is an illustration showing a mechanism for opening or closing a dispersion phase-feeding port of a microdroplet-producing apparatus.
FIG. 12 is an illustration showing a mechanism for opening or closing a dispersion phase-feeding port of a microdroplet-producing apparatus.
FIG. 13 is an illustration showing a mechanism for opening or closing a dispersion phase-feeding port of a microdroplet-producing apparatus.
FIG. 14 is an illustration showing a microcapsule-forming apparatus according to an embodiment of the present invention.

Embodiments of the present invention will now be described in detail.

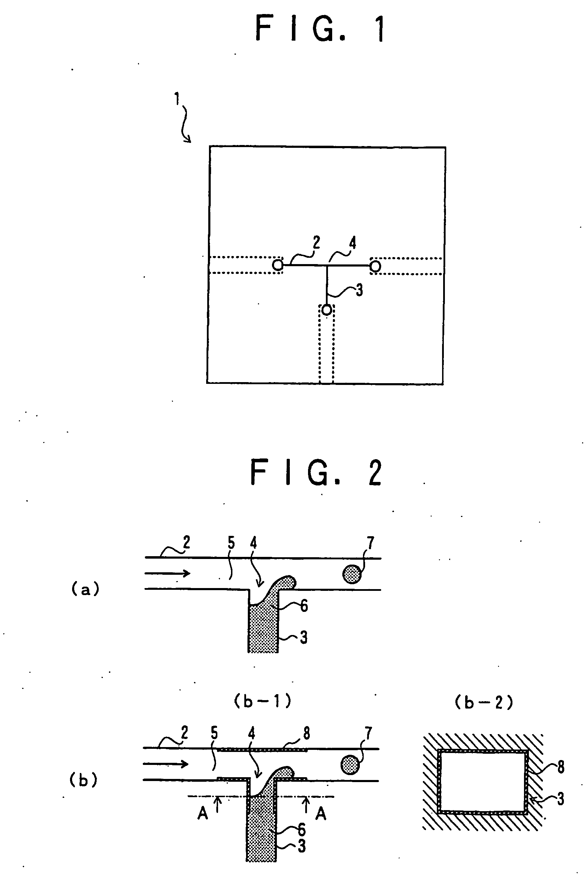

FIG. 1 is a plan view showing an apparatus for producing microdroplets and FIG. 2 is an illustration showing processes for producing such microdroplets. FIG. 2(a) is an illustration showing a microdroplet-producing process (No. 1), FIG. 2(b) is another illustration showing a microdroplet-producing process (No. 2), FIG. 2(b-1) is a fragmentary sectional view thereof, and FIG. 2(b-2) is the sectional view of FIG. 2(b-1) taken along the line A-A.

In these figures, reference numeral 1 represents a main body of the microdroplet-producing apparatus, reference numeral 2 represents a microchannel in which a continuous phase flows and which is disposed in the main body 1, reference numeral 3 represents a dispersion phase-feeding channel placed such that the dispersion phase-feeding channel 3 and the microchannel 2 cross, reference numeral 4 represents a dispersion phase-feeding port, reference numeral 5 represents the continuous phase (for example, oil), reference numeral 6 represents a dispersion phase (for example, water), reference numeral 7 represents a microdroplet, and reference numeral 8 represents hydrophobic film.

In the above configuration, the dispersion phase 6 is fed to the continuous phase 5 flowing in the microchannel 2 in such a manner that flows of the dispersion phase 6 and the continuous phase 5 cross each other, as shown in FIG. 2. Part of the continuous phase 5 extends through each dispersion phase-feeding port 4, thereby producing the microdroplets 7 having a diameter smaller than the width of the dispersion phase-feeding channel 3.

For example, microdroplets having a diameter of about 25 µm can be obtained when the pressure of the dispersion phase (water) 6 is set to 2.45 kPa, the pressure of the continuous phase (oil containing 70% of oleic acid) 5 is set to 4.85 kPa, and the microchannel 2 and the dispersion phase-feeding channel 3 have a width of 100 µm and a height of 100 µm. When the pressure of the continuous phase is set to 5.03 kPa, microdroplets having a diameter of about 5 µm can be obtained.

As shown in FIGS. 2(b-1) and 2(b-2), in order to readily form the microdroplets 7 (in order to readily repelling the microdroplets), the hydrophobic films 8 are preferably disposed on portions of the inner walls of the microchannel 2, in which the continuous phase 5 flows, and the dispersion phase-feeding channel 3, wherein the portions are disposed at the vicinity of the junction of the flows of the continuous phase (for example, oil) 5 and the dispersion phase (for example, water) 6.

Since the continuous phase 5 contains oil and the dispersion phase 6 contains water, the hydrophobic films 8 are preferably used. However, when the continuous phase contains water and the dispersion phase contains oil, hydrophilic films are preferably used.

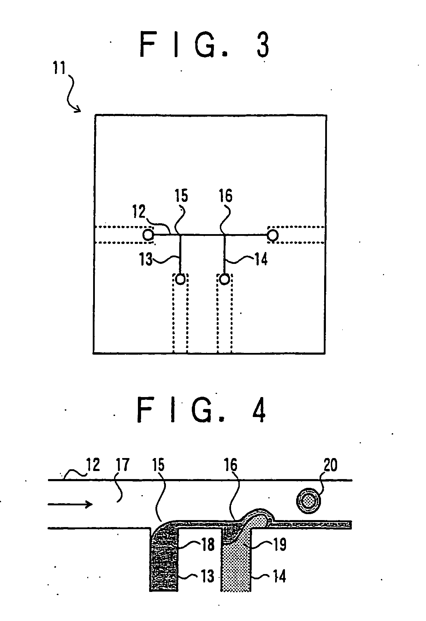

FIG. 3 is a plan view showing an apparatus for producing microcapsules. and FIG. 4 is an illustration showing a process for producing such microcapsules.

In these figures, reference numeral 11 represents a main body of the microcapsule-producing apparatus, reference numeral 12 represents a microchannel in which a continuous phase flows and which is disposed in the main body 11, reference numeral 13 represents a shell-forming phase-feeding channel placed such that the shell-forming phase-feeding channel 13 and the microchannel 12 cross, reference numeral 14 represents a content-forming phase-feeding channel placed such that the content-forming phase-feeding channel 14 and the microchannel 12 cross, reference numeral 15 represents a shell-forming phase-feeding port, reference numeral 16 represents a content-forming phase-feeding port, reference numeral 17 represents the continuous phase (for example, water), reference numeral 18 represents a shell-forming phase, reference numeral 19 represents a content-forming phase, and reference numeral 20 represents a microcapsule.

In the above configuration, the shell-forming phase 18 and the content-forming phase 19 are fed to the continuous phase 17 flowing in the microchannel 12 in such a manner that flows of the shell-forming phase 18 and the content-forming phase 19 join the flow of the continuous phase 17, as shown in FIG. 4. The shell-forming phase 18 is fed from positions upstream to positions for feeding the content-forming phase 19 in such a manner that shell-forming phase 18 forms a thin layer.

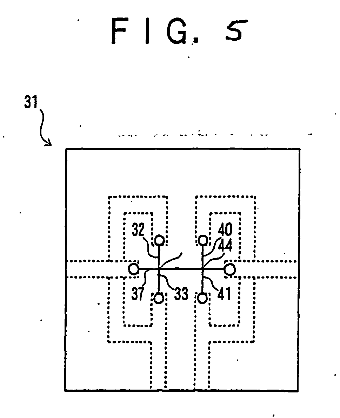

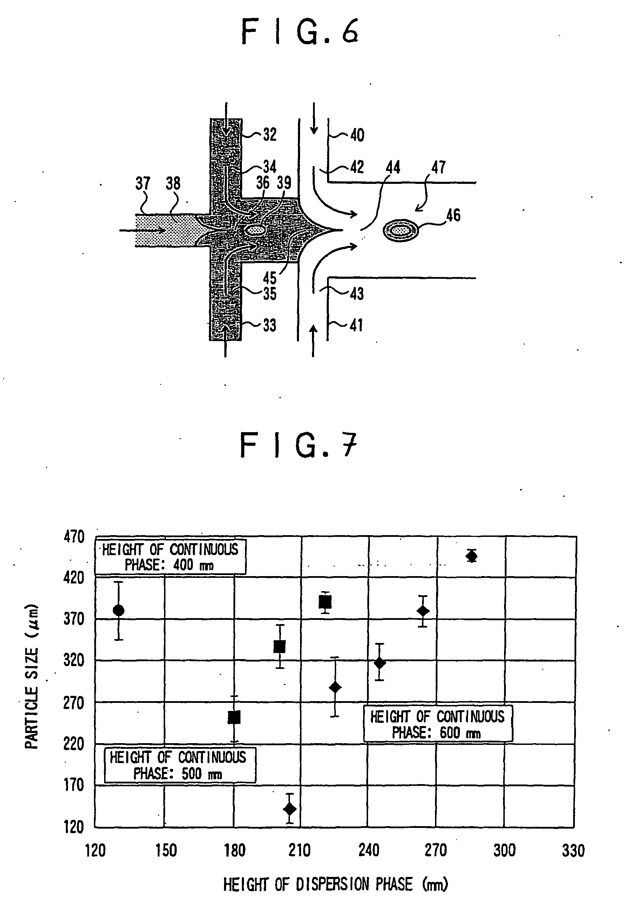

FIG. 5 is a plan view showing an apparatus for producing microcapsules and FIG. 6 is an illustration showing a process for producing such microcapsules.

In these figures, reference numeral 31 represents a main body of the microcapsule-producing apparatus, reference numeral 32 represents a first microchannel in which a continuous phase flows and which is disposed in the main body 31, reference numeral 33 represents a second microchannel in which another continuous phase flows and which is disposed in the main body 31, reference numeral 34 represents a first continuous phase (for example, oil), reference numeral 35 represents a second continuous phase (for example; oil), reference numeral 36 represents then junction of flows of the first continuous phase 34 and the second continuous phase 35, reference numeral 37 represents a content-forming phase-feeding channel, reference numeral 38 represents a content-forming phase (for example, water), reference numeral 39 represents a microdroplet (for example, water spheres), reference numeral 40 represents a third microchannel in which another continuous phase flows and which is disposed in the main body 31, reference numeral 41 represents a fourth microchannel in which another continuous phase flows and which is disposed in the main body 31, reference numeral 42 represents a third continuous phase (for example, water), reference numeral 43 represents a fourth continuous phase (for example, water), reference numeral 44 represents the junction of flows of the third continuous phase 42 and the fourth continuous phase 43, reference numeral 45 represents a shell-forming phase, reference numeral 46 represents a shell-forming microdroplet, and reference numeral 47 represents a microcapsule.

In the above configuration, the content-forming phase 38 is fed to the continuous phases 34 and 35 flowing in the first and second microchannels 32 and 33, respectively, in such a manner that the flow of the content-forming phase 38 joins the flows of the continuous phases 34 and 35. Thereby, the microdroplets 39 for forming contents are formed.

Subsequently, the shell-forming phase 45 containing the first and second continuous phases 34 and 35 mixed together is fed to the continuous phases 42 and 43 flowing in the third and fourth microchannels 40 and 41 in such a manner that the flow of the shell-forming phase 45 joins the junction of the flows of the third and fourth continuous phases 42 and 43. Thereby, a coating for forming a shell is formed on each microdroplet 39 for forming a content, thereby forming each microcapsule 47.

The microcapsule 47 contains the single microdroplet 39. However, the microcapsule 47 may contain a plurality of the microdroplets 39.

FIG. 7 shows the particle size obtained by varying the height (which can be converted into the pressure) of the continuous phases and dispersion phases, when the first and second microchannels 32 and 33 and the content-forming phase-feeding channel 37 have a width of 100 µm and a height of 100 µm and the channel in which the microdroplets 39 are present have a width of 500 µm and a height of 100 µm. It is clear that the particle size can be controlled by varying the height (which can be converted into the pressure) of the continuous phases and dispersion phases.

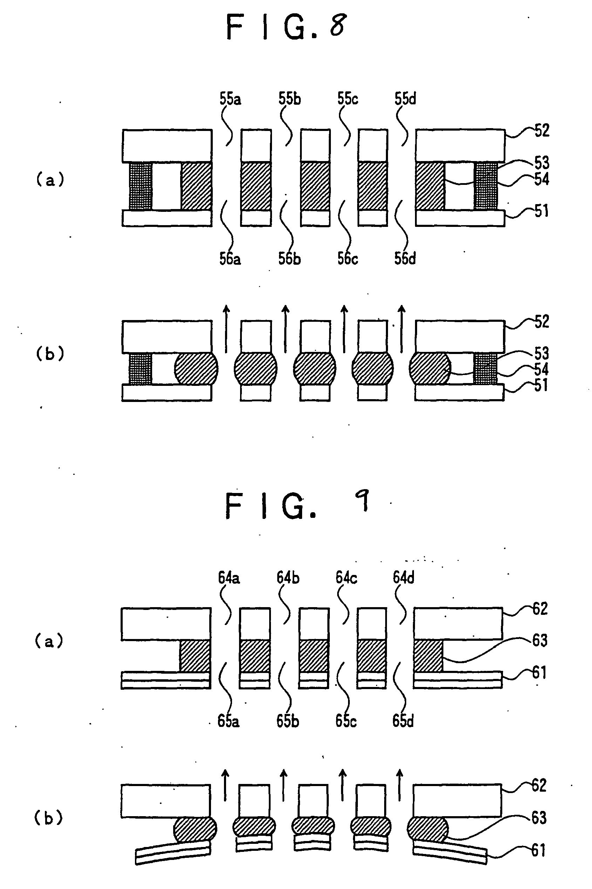

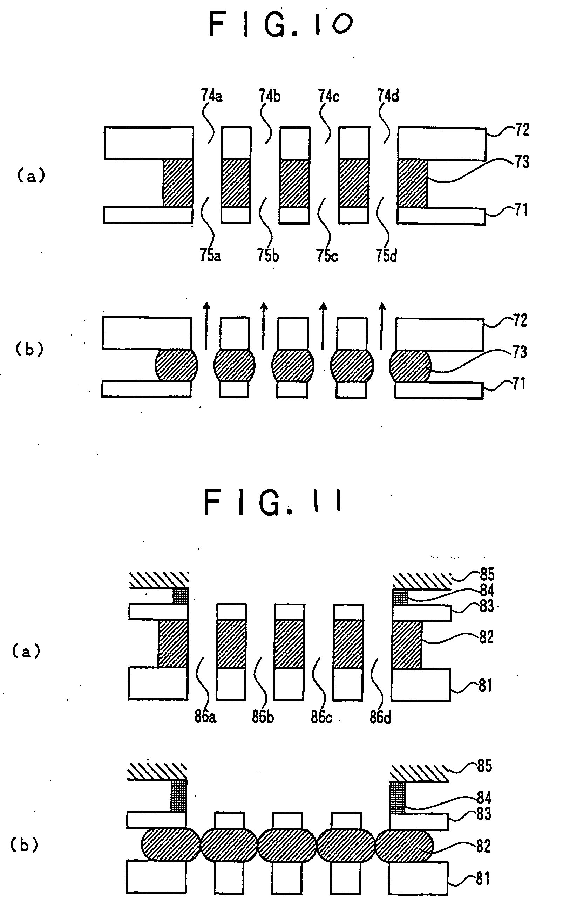

FIG. 8 is an illustration showing a mechanism for ejecting a dispersion phase, a shell-forming phase, or a content-forming phase placed in a microdroplet-producing apparatus. FIG. 8(a) is an illustration showing such a situation that piezoelectric actuators are expanded and therefore such a phase is not ejected, and FIG. 10(b) is an illustration showing such a situation that the piezoelectric actuators are contracted to eject the phase.

In these figures, reference numeral 51 represents a substrate, reference numeral 52 represents a driven plate, reference numeral 53 represents rubber, reference numeral 54 represents the piezoelectric actuators each disposed at the corresponding ends of the driven plate 52, reference numerals 55a-55d represent a plurality of feeding ports, and reference numerals 56a-56d represent a plurality of channels arranged for a single dispersion phase. A back pressure is applied to the bottom portion of the dispersion phase.

As shown in FIG. 8(a), a plurality of the channels 56a-56d are arranged, and the dispersion phase can be ejected therefrom at the same time when the piezoelectric actuators 54 are contracted; as shown in FIG. 10(b).

Various actuators may be used instead of the above piezoelectric actuators.

FIG. 9 is an illustration showing a mechanism for ejecting a dispersion phase, a shell-forming phase, or a content-forming phase placed in a microdroplet-producing apparatus.

FIG. 9(a) is an illustration showing such a situation that a bimorph actuator is not warped and therefore such a phase is not ejected, and FIG. 11(b) is an illustration showing such a situation that the bimorph actuator is warped, thereby ejecting the phase.

In these figures, reference numeral 61 represents the bimorph actuator, reference numeral 62 represents a fixed plate, reference numeral 63 represents rubber, reference numerals 64a-64d represent a plurality of feeding ports, and reference numerals 65a-65d represent a plurality of channels arranged for a single dispersion phase. A back pressure is applied to the bottom portion of the dispersion phase.

As shown in FIG. 9(a), a plurality of the channels 65a-65d are arranged, and the dispersion phase can be ejected therefrom at the same time by the operation (upward warping) of the bimorph actuator 61, as shown in FIG. 9(b).

FIG. 10 is an illustration showing a mechanism for ejecting a dispersion phase, a shell-forming phase, or a content-forming phase placed in a microdroplet-producing apparatus.

FIG. 10(a) is an illustration showing such a situation that an electrostrictive polymer is not energized and therefore such a phase is not ejected, and FIG. 10(b) is an illustration showing such a situation that the electrostrictive polymer is energized (contracted), thereby ejecting the phase.

In these figures, reference numeral 71 represents a substrate, reference numeral 72 represents a driven plate, reference numeral 73 represents the electrostrictive polymer, reference numerals 74a-74d represent a plurality of feeding ports, and reference numerals 75a-75d represent a plurality of channels arranged for a single dispersion phase. A back pressure is applied to the bottom portion of the dispersion phase.

As shown in FIG. 10(a), a plurality of the channels 75a-75d are arranged, and the dispersion phase can be ejected therefrom at the same time by the operation (contraction) of the electrostrictive polymer 73, as shown in FIG. 10(b).

FIG. 11 is an illustration showing a mechanism for opening or closing a dispersion phase-feeding port of a microdroplet-producing apparatus. FIG. 11(a) is an illustration showing such a situation that piezoelectric actuators are not energized (contracted) and therefore gates for a phase are opened, and FIG. 11(b) is an illustration showing such a situation that the piezoelectric actuators are energized (expanded) and thereby the gates for the phase are closed.

In these figures, reference numeral 81 represents a substrate, reference numeral 82 represents rubber, reference numeral 83 represents a driven plate, reference numeral 84 represents the piezoelectric actuators, reference numeral 85 represent a fixed plate, and reference numerals 86a-86d represent a plurality of the gates.

As shown in these figures, a plurality of the gates 86a-86d are arranged, and all the gates for the phase can be closed by the operation of the two piezoelectric actuators 84 disposed at both sides.

Various actuators may be used instead of the above actuators.

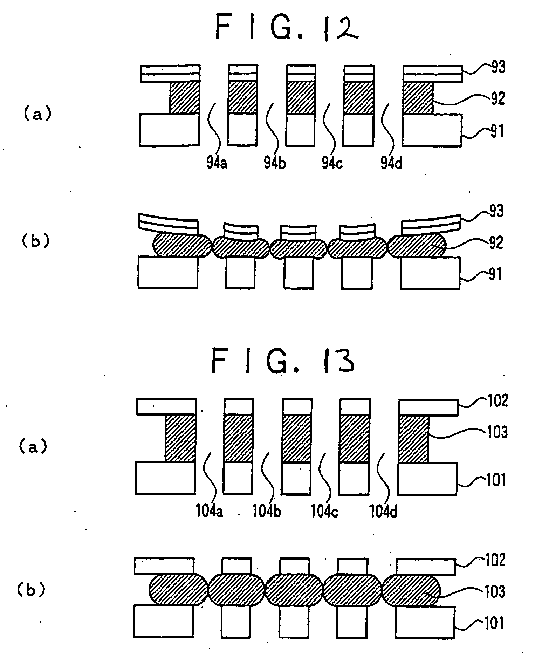

FIG. 12 is an illustration showing a mechanism for opening or closing a dispersion phase-feeding port of a microdroplet-producing apparatus. FIG. 12(a) is an illustration showing such a situation that a bimorph actuator is not energized (not warped) and therefore gates for a phase are opened, and FIG. 12(b) is an illustration showing such a situation that the bimorph actuator is energized (warped downward) and thereby the gates for the phase are closed.

In these figures, reference numeral 91 represents a substrate, reference numeral 92 represents rubber, reference numeral 93 represents the bimorph actuator, and reference numerals 94a-94d represent a plurality of the gates.

As shown in these figures, a plurality of the gates 94a-94d are arranged, and all the gates can be closed at the same time by the operation of the bimorph actuator 93.

FIG. 13 is an illustration showing a mechanism for opening or closing a dispersion phase-feeding port of a microdroplet-producing apparatus. FIG. 13(a) is an illustration showing such a situation that an electrostrictive polymer is not energized and therefore gates for a phase are opened, and FIG. 13(b) is an illustration showing such a situation that the electrostrictive polymer is energized (contracted) and thereby the gates for the phase are closed.

In these figures, reference numeral 101 represents a substrate, reference numeral 102 represents a driven plate, reference numeral 103 represents the electrostrictive polymer, and reference numerals 104a-104d represent a plurality of the gates.

As shown in FIG. 13(a), a plurality of the gates 104a-104d are opened when the electrostrictive polymer 103 is not energized (expanded). As shown in FIG. 13(b), a plurality of the gates 104a-104d are closed at the same time when the electrostrictive polymer 103 is energized (contracted).

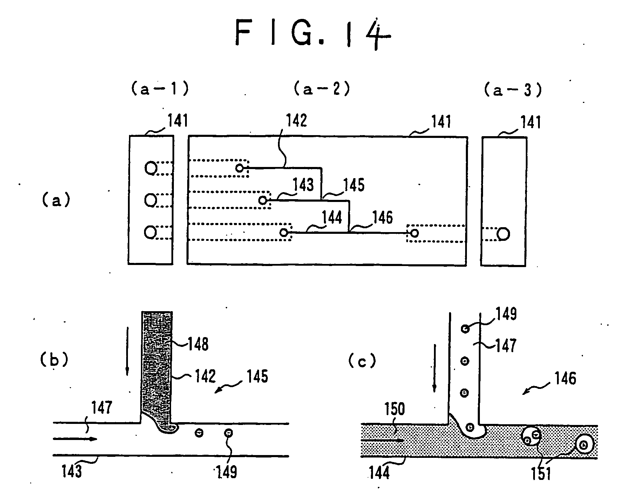

FIG. 14 is an illustration showing a microcapsule-forming apparatus according to an embodiment of the present invention. FIG. 14(a) is a schematic view showing the total configuration of the microcapsule-forming apparatus, and FIG. 14(a-1) is the left side elevational view thereof, FIG. 14(a-2) is a schematic plan view thereof, FIG. 14(a-3) is the right side elevational view thereof. FIG. 14(b) is an illustration showing a first junction, and FIG. 14(C) is an illustration showing a second junction.

In these figures, reference numeral 141 represents a main body of the microcapsule-forming apparatus, reference numeral 142 represents a microchannel in which a dispersion phase (for example, water) flows, reference numeral 143 represents a microchannel in which a first continuous phase (for example, oil) flows, reference numeral 144 represents a microchannel in which a second continuous phase (for example, water) flows, reference numeral 145 represents the first junction at which flows of the dispersion phase and the first continuous phase are joined together, reference numeral 146 represents the second junction at which flows of the dispersion phase, the first continuous phase, and the second continuous phase are joined together, reference numeral 147 represents the first continuous phase, reference numeral 148 represents the dispersion phase, reference numeral 149 represents an emulsion (for example, water), reference numeral 150 represents the second continuous phase, and reference numeral 151 represents formed microcapsules. The microcapsules 151 can contain one or more emulsions 149.

As described above in detail microcapsules can be rapidly formed in a simple manner.

### Industrial Applicability

According to a process and apparatus for producing microcapsules according to embodiments of the present invention, microcapsules can be rapidly formed in a simple manner. Such a process and apparatus are fit for the field of drug production and biotechnology.

## Claims

1. A process for producing microcapsules comprising the steps of:
feeding a first dispersion phase (148) from a first microchannel (142) into a first continuous phase (147) flowing in a second microchannel (143) such that flow of the first dispersion phase (148) joins the flow of the first continuous phase (147) to form emulsions (149) in the first continuous phase (147); and
feeding the first continuous phase (147) containing the emulsions (149) into a second continuous phase (150) flowing in a third microchannel (144) such that flow of the first continuous phase (147) containing the emulsions (149), and working as a second dispersion phase, joins the flow of the second continuous phase (150) to form microcapsules (151) in the second continuous phase (150), the microcapsules (151) being formed of the first continuous phase (147) encapsulating the emulsions (149) therein.

2. An apparatus for producing microcapsules comprising:
(a) a first microchannel (142);
(b) a second microchannel (143) formed so as to join the first microchannel (142);
(c) a third microchannel (144) formed so as to join the second microchannel (143) at a position downstream of the first microchannel (142); and
(d) means for feeding a first dispersion phase (148) into the first microchannel (142), means for feeding a first continuous phase (147) into the second microchannel (143), and means for feeding a second continuous phase (150) into the third microchannel (14), such that, in use, flow of the first dispersion phase (148) joins the flow of the first continuous phase (147) to form emulsions (149) in the first continuous phase (147), and flow of the first continuous phase (147) containing the emulsions (149), and working as a second dispersion phase, joins the flow of the second continuous phase (150) to form microcapsules (151) in the second continuous phase (150), the microcapsules (151) being formed of the first continuous phase (147) encapsulating the emulsions (149) therein.

3. An apparatus according to claim 2 further comprising films (8) disposed on portions of inner wall surfaces of the second microchannel (143) in which the first continuous phase (147) flows and the first microchannel (142) for feeding the first dispersion phase (148), for readily forming the emulsions (149), wherein the portions include the junction point of the flows of the first continuous phase (147) and the first dispersion phase (148) and the vicinity of the junction point.

## Patentansprüche

1. Verfahren zum Herstellen von Mikrokapseln, das folgende Schritte umfasst:
Zuführen einer ersten Dispersionsphase (148) aus einem ersten Mikrokanal (142) in eine erste kontinuierliche Phase (147), die in einen zweiten Mikrokanal (143) fließt, so dass der Fluss der ersten Dispersionsphase (148) sich mit dem Fluss der ersten kontinuierlichen Phase (147) verbindet, um in der ersten kontinuierlichen Phase (147) Emulsionen (149) zu bilden; und
Zuführen der die Emulsionen (149) enthaltenden ersten kontinuierlichen Phase (147) in eine zweite kontinuierliche Phase (150), die in einen dritten Mikrokanal (144) fließt, so dass der Fluss der die Emulsionen (149) enthaltenden und als zweite Dispersionsphase wirkenden ersten kontinuierlichen Phase (147) sich mit dem Fluss der zweiten kontinuierlichen Phase (150) verbindet, um in der zweiten kontinuierlichen Phase (150) Mikrokapseln (151) zu bilden, wobei die Mikrokapseln (151) aus der ersten kontinuierlichen Phase (147) gebildet werden, welche die Emulsionen (149) darin verkapselt.

2. Vorrichtung zum Herstellen von Mikrokapseln, die umfasst:
(a) einen ersten Mikrokanal (142);
(b) einen zweiten Mikrokanal (143), der gebildet wird, um sich mit dem ersten Mikrokanal (142) zu verbinden;
(c) einen dritten Mikrokanal (144), der gebildet wird, um sich mit dem zweiten Mikrokanal (143) an einer stromabwärts gelegenen Stelle des ersten Mikrokanals (142) zu verbinden; und
(d) Mittel zum Zuführen einer ersten Dispersionsphase (148) in den ersten Mikrokanal (142), Mittel zum Zuführen einer ersten kontinuierlichen Phase (147) in den zweiten Mikrokanal (143) und Mittel zum Zuführen einer zweiten kontinuierlichen Phase (150) in den dritten Mikrokanal (144), so dass der Fluss der ersten Dispersionsphase (148) beim Gebrauch sich mit dem Fluss der ersten kontinuierlichen Phase (147) verbindet, um in der ersten kontinuierlichen Phase (147) Emulsionen (149) zu bilden, und der Fluss der die Emulsionen (149) enthaltenden und als zweite Dispersionsphase wirkenden ersten kontinuierlichen Phase (147) sich mit dem Fluss der zweiten kontinuierlichen Phase (150) verbindet, um in der zweiten kontinuierlichen Phase (150) Mikrokapseln (151) zu bilden, wobei die Mikrokapseln (151) aus der ersten kontinuierlichen Phase (147) gebildet werden, welche die Emulsionen (149) darin verkapselt.

3. Vorrichtung gemäß Anspruch 2, die ferner Filme (8) umfasst, welche auf Teilbereichen der Innenwandflächen des zweiten Mikrokanals (143), in den die erste kontinuierliche Phase (147) fließt, und des ersten Mikrokanals (142) zum Zuführen der ersten Dispersionsphase (148) angeordnet sind, um die Emulsionen (149) fertig zu bilden, wobei die Teilbereiche die Verbindungsstelle der Flüsse der ersten kontinuierlichen Phase (147) und der ersten Dispersionsphase (148) sowie die Nähe der Verbindungsstelle umfassen.

## Revendications

1. Procédé de production de microcapsules comprenant les étapes consistant à :
acheminer une première phase de dispersion (148) d'un premier microcanal (142) à une première phase continue (147) s'écoulant dans un deuxième microcanal (143) de sorte que l'écoulement de la première phase de dispersion (148) joint l'écoulement de la première phase continue (147) pour former des émulsions (149) dans la première phase continue (147) ; et
acheminer la première phase continue (147) contenant les émulsions (149) dans une deuxième phase continue (150) s'écoulant dans un troisième microcanal (144) de sorte que l'écoulement de la première phase continue (147) contenant les émulsions (149), et fonctionnant comme une deuxième phase de dispersion, joint l'écoulement de la deuxième phase continue (150) pour former des microcapsules (151) dans la deuxième phase continue (150), les microcapsules (151) étant formées de la première phase continue (147) y encapsulant les émulsions (149).

2. Appareil de production de microcapsules comprenant :
(a) un premier microcanal (142) ;
(b) un deuxième microcanal (143) formé de manière à joindre le premier microcanal (142) ;
(c) un troisième microcanal (144) formé de manière à joindre le deuxième microcanal (143) au niveau d'une position en aval du premier microcanal (142) ; et
(d) un moyen pour acheminer une première phase de dispersion (148) dans le premier microcanal (142), un moyen pour acheminer une première phase continue (147) dans le deuxième microcanal (143), et un moyen pour acheminer une deuxième phase continue (150) dans le troisième microcanal (144), de sorte que, en utilisation, l'écoulement de la première phase de dispersion (148) joint l'écoulement de la première phase continue (147) pour former des émulsions (149) dans la première phase continue (147), et l'écoulement de la première phase continue (147) contenant les émulsions (149), et fonctionnant comme une deuxième phase de dispersion, joint l'écoulement de la deuxième phase continue (150) pour former des microcapsules (151) dans la deuxième phase continue (150), les microcapsules (151) étant formées de la première phase continue (147) y encapsulant les émulsions (149).

3. Appareil selon la revendication 2, comprenant en outre des films (8) disposés sur des portions de surfaces de paroi intérieure du deuxième microcanal (143) dans lequel la première phase continue (147) s'écoule et le premier microcanal (142) pour acheminer la première phase de dispersion (148), pour former facilement les émulsions (149), dans lequel les portions comprennent le point de jonction des écoulements de la première phase continue (147) et de la première phase de dispersion (148) et le voisinage du point de jonction.
